# EUROPEAN PATENT APPLICATION

(11) **EP 4 494 977 A1**
(43) Date of publication of application: **22.01.2025**
(21) Application number: 24185276.3
(22) Date of filing: 28.06.2024
(51) Int. Cl.: B62D 21/11, B62D 29/00

(54) **SUBFRAME STRUCTURE AND VEHICLE**

(30) Priority: 18.07.2023 CN 202310887230
(71) Applicant: Xiaomi EV Technology Co., Ltd., 100176 Beijing (CN)
(72) Inventor: SU, Yonglei, Beijing, 100176 (CN); YIN, Daozhi, Beijing, 100176 (CN); LIU, Dongpo, Beijing, 100176 (CN); HU, Xi, Beijing, 100176 (CN); ZHANG, Chaojun, Beijing, 100176 (CN); PEI, Pei, Beijing, 100176 (CN); JIANG, Yan, Beijing, 100176 (CN); WU, Diyi, Beijing, 100176 (CN); SUN, Junwen, Beijing, 100176 (CN)
(74) Representative: Zimmermann, Tankred Klaus

(57) **Abstract**

A subframe structure and a vehicle. The subframe structure includes a ring frame (1) including a front cross beam (11) and a rear cross beam (12) spaced apart in a front-rear direction, and a left longitudinal beam (13) and a right longitudinal beam (14) spaced apart in a left-right direction, the left longitudinal beam (13) is connected to left ends of the front cross beam (11) and the rear cross beam (12) respectively, and the right longitudinal beam (14) is connected to right ends of the front cross beam (11) and the rear cross beam (12) respectively; and an upper cross beam (2) and a lower cross beam (3) spaced apart in an up-down direction, the upper cross beam (2) and the lower cross beam (3) are fixedly connected to the left longitudinal beam (13) and the right longitudinal beam (14).

## Description

### TECHNICAL FIELD

The present invention relates to the technical field of new energy automobile manufacturing, in particular to a subframe structure and a vehicle.

### BACKGROUND

Among components of a vehicle, a subframe can be seen as a frame of front and rear axles and is an integral part of the front and rear axles. The subframe functions to carry various forces and moments, and isolate vibration and noise, improving the comfort of the vehicle. In terms of the specific composition of the subframe, the subframe may include a left longitudinal beam, a right longitudinal beam, and a front cross beam and a rear cross beam which are connected between the left longitudinal beam and the right longitudinal beam, the subframe being connected to mounting brackets configured to mount vehicle components by welding, such as mounting brackets configured to mount suspensions, mounting brackets configured to mount control arms, mounting brackets configured to mount stabilizer bars, and the like.

### SUMMARY

An object of the present invention is to provide a subframe structure and a vehicle, the subframe structure being high in strength to at least partially solve problems in the related art.

According to a first aspect of the present invention, there is provided a subframe structure, includes: a ring frame including a front cross beam and a rear cross beam spaced apart in a front-rear direction, and a left longitudinal beam and a right longitudinal beam which are spaced apart in a left-right direction, the left longitudinal beam is connected to left ends of the front cross beam and the rear cross beam, respectively, and the right longitudinal beam is connected to right ends of the front cross beam and the rear cross beam respectively; and an upper cross beam being fixedly connected to an upper side wall of the left longitudinal beam and to an upper side wall of the right longitudinal beam , and a lower cross beam being fixedly connected to a lower side wall of the left longitudinal beam and to a lower side wall of the right longitudinal beam; wherein the upper cross beam and the lower cross beam are spaced apart in an up-down direction.

Optionally, the subframe structure further includes two first convex ribs, where one of the first convex ribs is connected to the front cross beam, the left longitudinal beam, and the upper cross beam, respectively; and the other of the first convex ribs is connected to the front cross beam, the right longitudinal beam, and the upper cross beam, respectively.

Optionally, the subframe structure further includes second convex ribs disposed at an inner side wall at a position where the rear cross beam is connected to the left longitudinal beam and/or at an inner side wall at a position where the rear cross beam is connected to the right longitudinal beam.

Optionally, the subframe structure further includes electric drive suspension mounting portions configured to mount electric drive suspensions and vehicle body suspension mounting portions configured to mount vehicle body suspensions, where a part of the electric drive suspension mounting portions are disposed on a front side face of the front cross beam, the other part of the electric drive suspension mounting portions are respectively disposed at one ends, close to the rear cross beam, of the left longitudinal beam and the right longitudinal beam, and the vehicle body suspension mounting portions are respectively disposed at four corners of the ring frame; and/or the subframe structure further includes avoidance through holes respectively disposed in the left longitudinal beam and the right longitudinal beam for avoidance of an output shaft of an electric drive system.

Optionally, the front cross beam, the rear cross beam, the left longitudinal beam, and the right longitudinal beam are hollow structures, and the front cross beam, the rear cross beam, the left longitudinal beam, and the right longitudinal beam have a wall thickness of 3-6 mm.

Optionally, at least part of inner side walls of the front cross beam, the rear cross beam, the left longitudinal beam and the right longitudinal beam are formed with wall thickness reinforcement portions.

Optionally, the front cross beam, the rear cross beam, the left longitudinal beam, the right longitudinal beam, and the upper cross beam are integrally cast and formed; and the left longitudinal beam and the right longitudinal beam are symmetrically disposed about a geometric center of the ring frame in a left-right direction.

Optionally, the upper cross beam includes an upper cross beam body provided with a weight reduction portion.

Optionally, the weight reduction portion is configured as grooves disposed in a middle of the upper cross beam body, and a plurality of first reinforcing ribs and second reinforcing ribs which are alternately arranged are disposed in each groove; and/or the weight reduction portion is configured as a hollow structure disposed in a middle of the upper cross beam body.

Optionally, the weight reduction portion further includes at least one weight reduction hole disposed at an end, close to the left longitudinal beam or the right longitudinal beam, of the upper cross beam body.

Optionally, the lower cross beam and the ring frame are integrally cast and formed.

Optionally, the lower cross beam is configured as a hollow structure, and is detachably connected to the ring frame.

Optionally, the upper cross beam and the lower cross beam are spaced apart in a front-rear direction.

Optionally, the subframe structure further includes a control arm mounting portion configured to mount a control arm, where the control arm mounting portion includes a first mounting bracket configured to mount a front upper arm, a second mounting bracket configured to mount a rear upper arm, a third mounting bracket configured to mount a toe-in arm, a fourth mounting bracket configured to mount a front lower arm, and a fifth mounting bracket configured to mount a rear lower arm.

Optionally, the first mounting bracket, the second mounting bracket, the third mounting bracket, the fourth mounting bracket and the fifth mounting bracket are configured as a tab type, an embedded type or an assembled type.

Optionally, the first mounting bracket is configured as the tab type, the second mounting bracket, the third mounting bracket and the fourth mounting bracket are each configured as the embedded type, and the fifth mounting bracket is configured as the assembly type.

Optionally, a lower side of the left longitudinal beam and a lower side of the right longitudinal beam are each integrally formed with a mounting seat forming the fifth mounting bracket configured to mount the rear lower arm, and the mounting seat has at least one mounting point formed on the side of the mounting seat back from the ring frame for mounting the lower cross beam.

According to a second aspect of the invention, there is provided a vehicle, including the subframe structure as described above.

By the above technical solutions, the ring frame includes the front cross beam, the rear cross beam, the left longitudinal beam, and the right longitudinal beam, while the upper cross beam is fixedly disposed between the upper side wall of the left longitudinal beam and the upper side wall of the right longitudinal beam, and the lower cross beam is fixedly disposed between the lower side wall of the left longitudinal beam and the lower side wall of the right longitudinal beam, thus, when the subframe structure is mounted on a vehicle, a new force transmission path can be increased through the structures of the upper cross beam and the lower cross beam, and at the same time, the load-bearing capacity of the subframe structure in the front-rear direction, the left-right direction, and the torsion can be increased, thus improving the strength of the subframe structure as a whole.

Other features and advantages of the present invention will be described in detail in the subsequent Detailed Description.

### BRIEF DESCRIPTION OF DRAWINGS

The accompanying drawings are used to provide a further understanding of the present invention and constitute a part of the description, and are used to explain the present invention together with the following specific embodiments, but do not constitute a limitation of the present invention.
FIG. 1 is a structural schematic diagram of a first angle of a first subframe structure provided in an example of the present invention.
FIG. 2 is a structural schematic diagram of a second angle of the first subframe structure provided in the example of the present invention.
FIG. 3 is a structural schematic diagram of a third angle of the first subframe structure provided in the example of the present invention.
FIG. 4 is a schematic diagram of an assembly structure of the first subframe structure provided in the example of the present invention, and a control arm, electric drive suspensions, and vehicle body suspensions.
FIG. 5 is a structural schematic diagram of a first angle of a second subframe structure provided in an example of the present invention.
FIG. 6 is a structural schematic diagram of a second angle of the second subframe structure provided in the example of the present invention.
FIG. 7 is a schematic partial structural cross-sectional view of the second subframe structure provided in the example of the present invention.
FIG. 8 is a schematic diagram of a third subframe structure provided in an example of the present invention.
FIG. 9 is a schematic partial structural cross-sectional view of the third subframe structure in the example of FIG. 8.

### DETAILED DESCRIPTION

Specific embodiments of the present invention are described in detail below with reference to the accompanying drawings. It should be understood that the specific embodiments described here are only used to illustrate and explain the present invention, and are not used to limit the present invention.

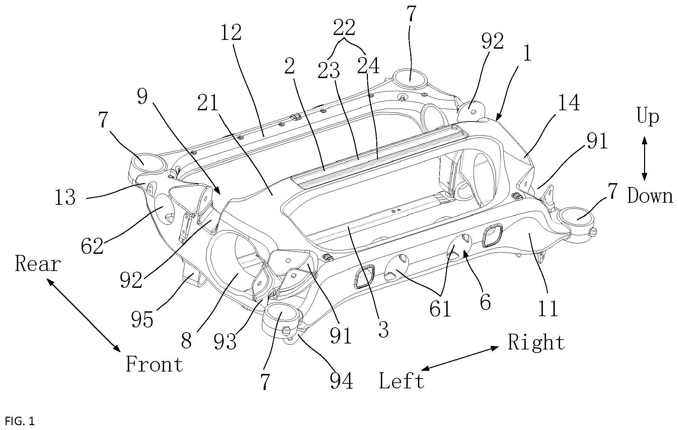

In the present invention, in the absence of a contrary explanation, the directional words used such as "upper, lower, left, right, front, and rear" usually refer to being defined based on a use state of a subframe structure, and may specifically refer to the directions of "upper, lower, left, right, front, and rear" shown in FIG. 1, and "inner and outer" refer to being in terms of contours of the corresponding parts themselves. In addition, the terms "first", "second", etc. used in the present invention are used to distinguish one element from another, and do not have a sequence and importance. When the following description relates to the drawings, the same numbers in different drawings represent the same or similar elements unless otherwise indicated.

In the related art, the subframe has the problem of insufficient support strength, which cannot provide sufficient lateral stiffness, NVH performance (Noise, Vibration, Harshness), and sufficient load-bearing resistance.

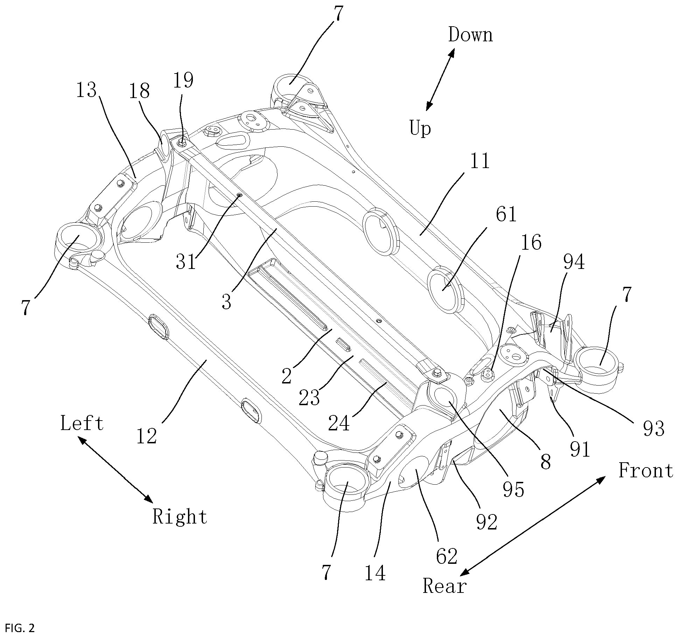

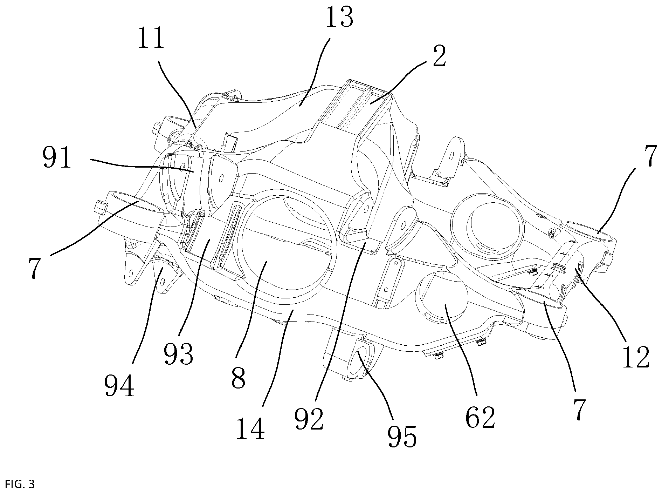

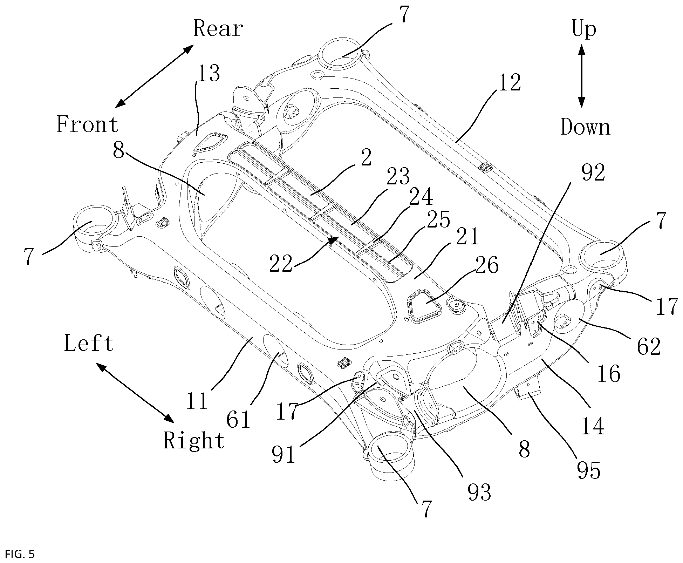

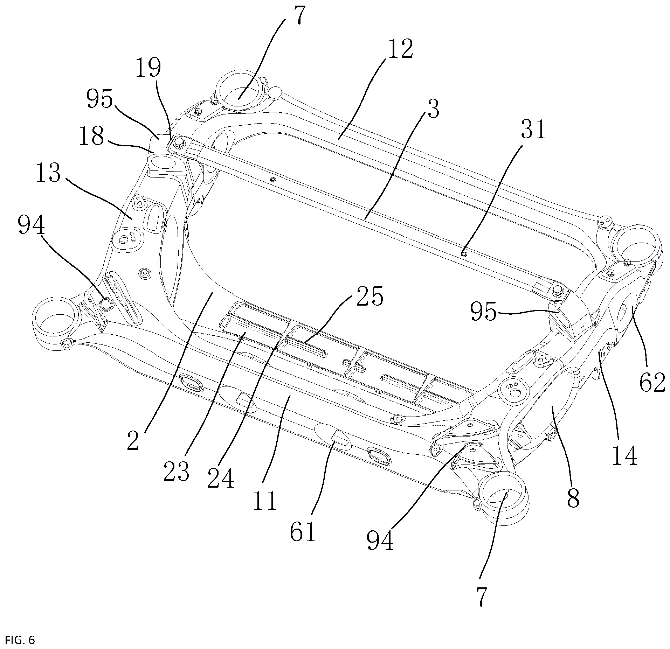

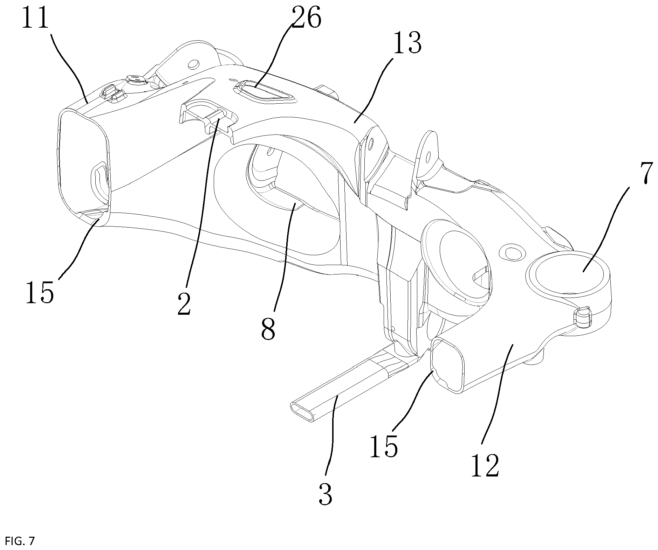

As shown in FIGS. 1 to 9, a first aspect of the present invention provides a subframe structure, include: a ring frame 1 including a front cross beam 11 and a rear cross beam 12 which are spaced apart in a front-rear direction, and a left longitudinal beam 13 and a right longitudinal beam 14 which are spaced apart in a left-right direction, the left longitudinal beam 13 is connected to left ends of the front cross beam 11 and the rear cross beam 12 respectively, and the right longitudinal beam 14 is connected to right ends of the front cross beam 11 and the rear cross beam 12 respectively; and an upper cross beam 2 and a lower cross beam 3 spaced apart in an up-down direction, the upper cross beam 2 is fixedly connected to an upper side wall of the left longitudinal beam 13 and an upper side wall of the right longitudinal beam 14, and the lower cross beam 3 is fixedly connected to a lower side wall of the left longitudinal beam 13 and a lower side wall of the right longitudinal beam 14.

By the above technical solution, the ring frame 1 includes the front cross beam 11, the rear cross beam 12, the left longitudinal beam 13, and the right longitudinal beam 14, while the upper cross beam 2 is fixedly disposed between the upper side wall of the left longitudinal beam 13 and the upper side wall of the right longitudinal beam 14, and the lower cross beam 3 is fixedly disposed between the lower side wall of the left longitudinal beam 13 and the lower side wall of the right longitudinal beam 14. Thus, after the subframe structure is assembled and installed on a vehicle, a force transmission path of the subframe structure can be increased by the structures of the upper cross beam 2 and the lower cross beam 3, and at the same time, the load-bearing capacity of the subframe structure in the front-rear direction, the left-right direction, and the up-down direction can be increased, thus improving the strength of the subframe structure as a whole.

In order to provide sufficient strength to the subframe structure while reducing the weight, in some examples, the front cross beam 11, the rear cross beam 12, the left longitudinal beam 13 and the right longitudinal beam 14 are hollow structures. For example, the front cross beam 11, the rear cross beam 12, the left longitudinal beam 13, and the right longitudinal beam 14 are each configured to be hollow, the front cross beam 11 and the rear cross beam 12 are spaced apart in the front-rear direction, the front cross beam 11 and the rear cross beam 12 extend along the left-right direction, the left longitudinal beam 13 and the right longitudinal beam 14 are spaced apart in the left-right direction and extend along the front-rear direction, the front cross beam 11, the rear cross beam 12, the left longitudinal beam 13 and the right longitudinal beam 14 are connected end to end in sequence to enclose the ring frame 1, the front cross beam 11, the rear cross beam 12, the left longitudinal beam 13 and the right longitudinal beam 14 may be integrally cast and formed so as to provide sufficient strength to the ring frame 1 as a whole, while also reducing the weight of the subframe structure as a whole through the provision of the hollow structures, so as to reduce the weight of the subframe structure while having sufficient strength.

Of course, a manner in which the front cross beam 11, the rear cross beam 12, the left longitudinal beam 13, and the right longitudinal beam 14 in the ring frame 1 are integrally cast and formed is illustrative, and in other examples, the front cross beam 11, the rear cross beam 12, the left longitudinal beam 13, and the right longitudinal beam 14 in the ring frame 1 may be separately formed and welded end-to-end in sequence. In addition, when the ring frame 1 is formed by integral casting, the ring frame 1 is provided with a pouring nozzle, a riser, etc., which are conventionally provided in the casting process.

In order to facilitate mounting of the subframe structure and an electric drive system, in some examples, the subframe structure further includes electric drive suspension mounting portions 6 configured to mount electric drive suspensions 150, where a part of the electric drive suspension mounting portions 6 are disposed on a front side face of the front cross beam 11, the other part of the electric drive suspension mounting portions 6 are respectively disposed at one ends, close to the rear cross beam 12, of the left longitudinal beam 13 and the right longitudinal beam 14, and vehicle body suspension mounting portions 7 are respectively disposed at four corners of the ring frame 1. Where the electric drive system is connected to the subframe structure via the electric drive suspensions 150, the electric drive suspensions 150 can provide support for the electric drive system, ensuring that the electric drive system is installed on the vehicle after being assembled with the subframe structure, and during the operation of the vehicle, the electric drive suspensions 150 have sufficient stiffness in the case of large impacts such as acceleration, braking, crossing pits and ridges, and the like to ensure that a motion displacement of the electric drive system is controllable, and avoid excessive deviation of the electric drive system to be in contact with adjacent components. In addition, in order to make the electric drive force balanced, the electric drive suspension mounting portions 6 may be configured as two first electric drive suspension mounting holes 61 formed in the front cross beam 11, and two second electric drive suspension mounting holes 62 respectively disposed at rear ends of the left longitudinal beam 13 and the right longitudinal beam 14, where the two first electric drive suspension mounting holes 61 are symmetrically fixed on the front cross beam 11 with respect to a geometric center of the front cross beam 11, the two second electric drive suspension mounting holes 62 are symmetrically fixed on the left longitudinal beam 13 and the right longitudinal beam 14 with respect to a geometric center of the ring frame 1, the electric drive suspensions 150 can thus be distributed more evenly by four mounting positions, the provision of the electric drive suspension mounting portions 6 thus enables a more uniform distribution of the electric drive suspensions 150, thus facilitating the mounting of the electric drive system on the subframe structure, and stable connection of the electric drive system to the subframe structure during operation of the vehicle to adapt to more road conditions. At the same time, the electric drive suspensions 150 can also function as vibration isolation, and the electric drive suspensions 150 can be provided to partially absorb the vibration energy, thus reducing the vibration energy passing through the subframe structure and the vehicle body under various road conditions, thus reducing the noise, and improving the NVH (Noise, Vibration and Harshness) performance of the vehicle.

Similarly, in order to facilitate an assembly of the subframe structure with the body of the vehicle, in some examples, the subframe structure may further include vehicle body suspension mounting portions 7 for vehicle body suspensions, the vehicle body suspension mounting portions 7 being respectively disposed at the corners of the ring frame 1. For example, the ring frame 1 is approximately in a rectangle, the vehicle body suspension mounting portions 7 are respectively disposed at four corners of the rectangle, the vehicle body suspension mounting portions 7 may be vehicle body suspension mounting holes, vehicle body suspensions 160 are mounted in the vehicle body suspension mounting holes to realize connection of the subframe structure to the body of the vehicle, by disposing the vehicle body suspension mounting holes at four corners of the ring frame 1, it is possible to facilitate assembly of the subframe structure with a vehicle body structure of the vehicle, while connecting the subframe structure with the vehicle body structure by the vehicle body suspensions 160, and it is also possible to reduce the vibration energy passing through the vehicle body structure, thus reducing the noise, and improving the NVH performance of the vehicle.

It can be understood that the electric drive suspensions 150 and the vehicle body suspensions 160 described above may be rubber suspensions or hydraulic suspensions.

In addition, in order to facilitate an output shaft of the electric drive system to extend out from the subframe structure, in some examples, the subframe structure further includes avoidance through holes 8 respectively disposed at one ends, close to the front cross beam 11, of the left longitudinal beam 13 and the right longitudinal beam 14, so that the provision of the avoidance through hole 8 can facilitate the output shaft of the electric drive system to pass through the middles of the left longitudinal beam 13 and the right longitudinal beam 14.

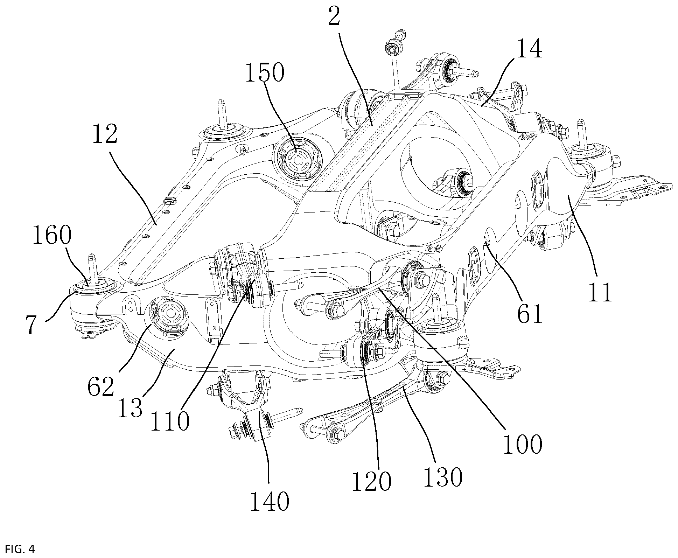

To facilitate assembly of the subframe structure with a control arm assembly, in some examples, the subframe structure further includes a control arm mounting portion 9 configured to mount a control arm, where the control arm mounting portion 9 includes a first mounting bracket 91 configured to mount a front upper arm, a second mounting bracket 92 configured to mount a rear upper arm, a third mounting bracket 93 configured to mount a toe-in arm, a fourth mounting bracket 94 configured to mount a front lower arm, and a fifth mounting bracket 95 configured to mount a rear lower arm. The first mounting bracket 91, the second mounting bracket 92, the third mounting bracket 93, the fourth mounting bracket 94, and the fifth mounting bracket 95 may be configured as a tab type, an embedded type or an assembled type, and as shown in FIG. 4, the first mounting bracket 91 is configured as the tab type, the first mounting bracket 91 may be disposed in a transition section between the front cross beam 11 and the right longitudinal beam 14, the first mounting bracket 91 includes two first tabs, the first tabs extend in a direction away from the ring frame 1 and are spaced apart on an upper side face of the transition section between the front cross beam 11 and the right longitudinal beam 14, and a front upper arm 100 of the control arm is disposed between the two first tabs and hingedly connected with the two first tabs through a connecting shaft to enable the front upper arm 100 to rotate between the two first tabs; the second mounting bracket 92, the third mounting bracket 93 and the fourth mounting bracket 94 are each configured as the embedded type, that is, a region under force in the second mounting bracket 92, the third mounting bracket 93, and the fourth mounting bracket 94 is a portion of the ring frame 1, and the other portion is a second tab, and after the rear upper arm 110, the toe-in arm 120, and the front lower arm 130 are mounted on the second mounting bracket 92, the third mounting bracket 93, and the fourth mounting bracket 94 formed by the combination of the ring frame 1 and the second tab, main force-bearing areas of the rear upper arm 110, the toe-in arm 120 and the front lower arm 130 on the second mounting bracket 92, the third mounting bracket 93 and the fourth mounting bracket 94 can be carried by the portion of the ring frame 1, so as to improve the stability of the mounting of the rear upper arm, the toe-in arm and the front lower arm on the subframe structure; and the fifth mounting bracket 95 is configured as the assembled type, that is, a lower side of the left longitudinal beam 13 and a lower side of the right longitudinal beam 14 are each integrally formed with a mounting seat 18 forming the fifth mounting bracket 95, and the mounting seat 18 has at least one mounting point 19 formed on the side of the mounting seat 18 back from the ring frame 1 for mounting the lower cross beam 3, each mounting seat 18 is provided with a mounting hole, the rear lower arm 140 is hingedly connected with the mounting holes through a connecting shaft, the mounting points 19 can be configured as threaded holes at bottom ends of the mounting seats 18, and both ends of the lower cross beam 3 are respectively fixed to the mounting points 19 of the mounting seats 18 which are correspondingly disposed on the left longitudinal beam 13 and the right longitudinal beam 14 through fasteners.

It can be understood that the positions of the first mounting bracket 91, the second mounting bracket 92, the third mounting bracket 93, the fourth mounting bracket 94 and the fifth mounting bracket 95 with respect to the ring frame 1 are cooperatively arranged according to the structure of the corresponding control arm, the positions and angles of orientation of the first mounting bracket 91, the second mounting bracket 92, the third mounting bracket 93, the fourth mounting bracket 94, and the fifth mounting bracket 95 may be selectively changed according to different control arm structures, as long as the mounting relationship with the control arm is can be met.

To further improve the overall strength of the subframe structure, in some examples, at least part of inner side walls of the front cross beam 11, the rear cross beam 12, the left longitudinal beam 13 and the right longitudinal beam 14 are formed with wall thickness reinforcement portions 15, for example, the front cross beam 11 and the rear cross beam 12 are rectangular in cross section, the wall thickness reinforcement portions 15 may be disposed at inner side walls at the corners of inner cavities of the front cross beam 11 and the left longitudinal beam 13 and the right longitudinal beam 14, and may also be disposed at inner side walls at the corners of inner cavities of the rear cross beam 12 and the left longitudinal beam 13 and the right longitudinal beam 14, so that a position where both ends of the front cross beam 11 are connected to the left longitudinal beam 13 or the right longitudinal beam 14 can be reinforced while a position where both ends of the rear cross beam 12 are connected to the left longitudinal beam 13 or the right longitudinal beam 14 can be reinforced, thus improving the overall strength of the subframe structure. In addition, in order to meet the casting process requirements, in some examples, the front cross beam 11, the rear cross beam 12, the left longitudinal beam 13 and the right longitudinal beam 14 have a wall thickness of 3-6 mm. For example, bottom walls of the front cross beam 11 and the rear cross beam 12 have a thickness of 6 mm, other portions of the front cross beam 11 and the rear cross beam 12 may have a thickness of 4 mm, thicknesses of middle areas of the left longitudinal beam 13 and the right longitudinal beam 14 may be set to be 3 mm, and thicknesses of connecting portions of the left longitudinal beam 13 and the right longitudinal beam 14 to the front cross beam 11 and the rear cross beam 12 are set to be 4 mm.

Of course, it can be understood that the example in which the wall thickness reinforcement portions 15 are disposed in the inner cavities of the front cross beam 11 and the rear cross beam 12 is schematic, in other examples, the wall thickness reinforcement portions 15 may also be disposed at other positions. For example, the thicknesses of the bottom walls of the front cross beam 11, the rear cross beam 12, the left longitudinal beam 13, and the right longitudinal beam 14 may be integrally raised by disposing the wall thickness reinforcement portions 15 on lower inner side walls of the front cross beam 11, the rear cross beam 12, the left longitudinal beam 13, and the right longitudinal beam 14 to reinforce the bottom of the ring frame 1 so as to reinforce the overall structure of the subframe structure.

In addition, in order to improve the overall structural strength of the subframe structure, in some examples, the front cross beam 11, the rear cross beam 12, the left longitudinal beam 13, the right longitudinal beam 14 and the upper cross beam 2 are integrally cast and formed. In order to facilitate manufacturing and forming of the subframe structure, in some examples, the left longitudinal beam 13 and the right longitudinal beam 14 have the same structure, and the left longitudinal beam 13 and the right longitudinal beam 14 are symmetrically disposed about the geometric center of the ring frame 1 in the left-right direction.

Of course, in order to increase the overall structural strength of the subframe structure and reduce the overall weight of the subframe structure, in some examples, the upper cross beam 2 includes an upper cross beam body 21 provided with a weight reduction portion 22. For example, the weight reduction portion 22 may include grooves 23 disposed in a middle of the upper cross beam body 21, the grooves 23 extend in a left-right direction and may be disposed at both upper and lower side faces of the upper cross beam body 21, a plurality of first reinforcing ribs 24 and second reinforcing ribs 25 are disposed in each groove 23, and the first reinforcing ribs 24 and the second reinforcing ribs 25 are arranged perpendicular to each other, so that the weight of the upper cross beam body 21 can be reduced by the provision of the grooves 23, and the upper cross beam 2 has sufficient strength as a whole by the provision of the first reinforcing ribs 24 and the second reinforcing ribs 25, so that the weight of the subframe structure can be reduced as a whole and has sufficient structural strength.

It can be understood that the weight reduction portion 22 is configured as the grooves 23, and the structures of the first reinforcing ribs 24 and the second reinforcing ribs 25 are illustrated, and in other examples, the weight reduction portion 22 may also be configured as a hollow structure disposed in the middle of the upper beam body 21.

In addition, in order to further reduce the weight of the upper cross beam 2, in some examples, weight reduction holes 26 are also disposed at both ends of the upper cross beam 2, and the weight of the upper cross beam 2 can be further reduced while ensuring sufficient structural strength of the upper cross beam 2 by the provision of the weight reduction holes 26.

In some examples, the cross-sectional dimensions of the upper cross beam 2 and the lower cross beam 3 can satisfy the mold flow molding requirements (i.e., satisfy the casting process requirements) if an arrangement space for the upper cross beam 2 and the lower cross beam 3 is sufficient. At this time, both the upper cross beam 2 and the lower cross beam 3 can be cast integrally with the ring frame 1 formed by the front cross beam 11, the rear cross beam 12, the left longitudinal beam 13, and the right longitudinal beam 14; if the arrangement space for the upper cross beam 2 and the lower cross beam 3 is insufficient, then the upper cross beam 2, the lower cross beam 3 and the ring frame 1 may be formed separately, and the upper cross beam 2 and the lower cross beam 3 may be fixedly connected to the ring frame 1 in a post-assembly manner after forming. For example, the upper cross beam 2 and the lower cross beam 3 may be fixedly connected to the ring frame 1 by welding or threaded connection. In addition, a material of the upper cross beam 2 and a material of the lower cross beam 3 may be selected from any one of steel, aluminum, carbon fiber, and plastic according to performance requirements. For example, the upper cross beam 2 may be cast integrally with the ring frame 1, the lower cross beam 3 may adopt a separately formed hollow tube, a flat mouth structure is disposed at both ends of the hollow tube in a left-right direction, the lower cross beam 3 is fixed to the mounting point 19 of the left longitudinal beam 13 and the mounting point 19 of the right longitudinal beam 14 by means of fasteners, an elastic element mounting point 31 is also disposed on the lower cross beam 3, the elastic element mounting point 31 is configured to elastically connect the lower cross beam 3 with a wind resistance guard plate, an elastic element may be an elastic piece, and by the provision of the elastic piece, on one hand, a support can be provided for the wind resistance guard plate, and on the other hand, relative movement of the subframe structure and a lower guard plate of the vehicle can be ensured when a vehicle is accelerated, is braked, or passes through a speed bump, or the like, and the lower guard plate is prevented from being damaged by contacting with other components.

It can be understood that the lower cross beam 3 may also be forged or extruded, and a manner in which the lower cross beam 3 is formed is not limited in the present invention.

In order to avoid the motion envelope of the electric drive system, in some examples, the upper cross beam 2 and the lower cross beam 3 may be spaced apart in a front-rear direction.

Furthermore, in order to facilitate mounting fit of the subframe structure and the vehicle, in some examples, a plurality of wire harness mounting points 16 and sensor mounting points 17 which are disposed on the ring frame 1 are also included. For example, the sensor mounting points 17 are configured to mount RNC (Road noise cancellation) sensors, and a main principle of RNC is also to superimpose sound peaks and troughs for noise reduction. However, road noise is from vibrations generated by the contact between tires and a road surface during driving, and these vibrations are transmitted into the vehicle to become sound so as to form noise. RNC active road noise reduction collects these vibrations that cause road noise by vibration RNC sensors arranged on a chassis, and a vehicle controller specifically reduces the road noise based on information collected by the RNC sensors to improve the NVH performance of the vehicle.

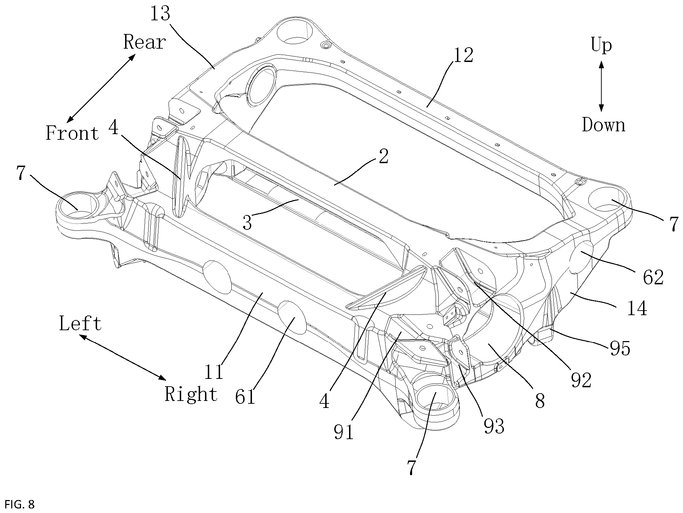

In order to increase the strength of the subframe structure, in some examples, please refer to FIG. 8, the subframe structure further includes two first convex ribs 4, where one of the first convex ribs 4 is connected to the front cross beam 11, the left longitudinal beam 13, and the upper cross beam 2, respectively; and the other of the first convex ribs 4 is connected to the front cross beam 11, the right longitudinal beam 14, and the upper cross beam 2, respectively, so that the structural strength between the front cross beam 11 and the upper cross beam 2 can be further enhanced by the provision of the two first convex ribs 4. When the front cross beam 11 or the upper cross beam 2 is subjected to a force, a new force transmission path can be increased by the provision of the first convex ribs 4, and the force of the front cross beam 11 can be transferred to the upper cross beam 2 or the force of the upper cross beam 2 can be transferred to the front cross beam 11.

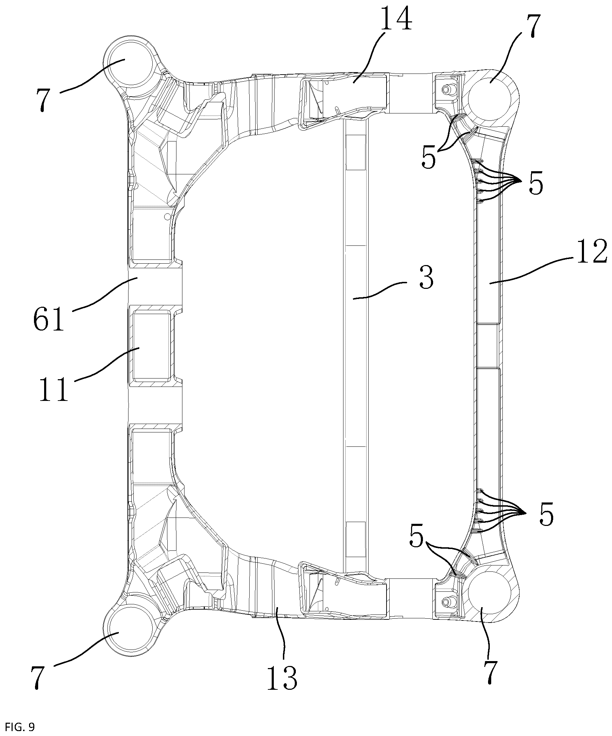

In addition, in order to further increase the strength of the subframe structure, in some examples, the subframe structure further includes second convex ribs 5 disposed at an inner side wall at a position where the rear cross beam 12 is connected to the left longitudinal beam 13 and/or at an inner side wall at a position where the rear cross beam 12 is connected to the right longitudinal beam 14. As shown in FIG. 9, the second convex ribs 5 may be rib plates or ribs, the ribs are disposed at inner side walls of left and right ends of the rear cross beam 12 to structurally reinforce the left and right ends of the rear cross beam 12, the rib plates are disposed outside the ribs, a plurality of the rib plates are provided, and one ends of at least part of the rib plates are fixedly connected to a transition section between the rear cross beam 12 and the left longitudinal beam 13, the other ends of the rib plates are fixedly connected to an outer side wall of the corresponding vehicle body suspension mounting hole, one ends of the other part of the rib plates are fixedly connected to a transition section between the rear cross beam 12 and the right longitudinal beam 14, the other ends of the other part of the rib plates are fixedly connected to an outer side wall of the corresponding vehicle body suspension mounting hole, so that the left and right ends of the rear cross beam 12, and the transition section between the rear cross beam 12 and the left longitudinal beam 13 and the transition section between the rear cross beam 12 and the right longitudinal beam 14 can be structurally reinforced by the provision of the second convex ribs 5.

A second aspect of the present invention provides a vehicle, including the subframe structure, a control arm, vehicle body suspensions, electric drive suspensions, an electric drive system and a vehicle body structure, electric drive suspension mounting portions 6, vehicle body suspension mounting portions 7 and a control arm mounting portion 9 are disposed on the subframe structure, the electric drive system is connected with the electric drive suspension mounting portions 6 of the subframe structure through the electric drive suspensions, the vehicle body structure is connected with the vehicle body suspension mounting portions 7 of the subframe structure through the vehicle body suspensions, the control arm is connected with the control arm mounting portion 9 of the subframe structure through a connecting shaft, thus, it is possible to assemble the subframe structure with the vehicle, and the subframe structure has sufficient strength to be connected with the vehicle body structure in the case of large impacts such as acceleration, braking, crossing pits and ridges, and the like during the operation of the vehicle, and the vibration energy of the vehicle body structure is reduced through the vehicle body suspensions and the electric drive suspensions, thus reducing the noise and improving the NVH performance of the vehicle. It can be understood that the vehicle described above includes all of the beneficial effects of the subframe structure, which will not be repeated here.

The preferred examples of the present invention are described in detail above in combination with the drawings, however, the present invention is not limited to the specific details in the above examples.

In addition, it should be noted that the specific technical features described in the specific examples can be combined in any appropriate mode without contradiction, and in order to avoid unnecessary repetitions, various possible combination modes are not described any more in the present invention.

## Claims

1. A subframe structure, comprising:
a ring frame (1) comprising a front cross beam (11) and a rear cross beam (12) spaced apart in a front-rear direction, and a left longitudinal beam (13) and a right longitudinal beam (14) spaced apart in a left-right direction, the left longitudinal beam (13) being connected to left ends of the front cross beam (11) and the rear cross beam (12), respectively, and the right longitudinal beam (14) being connected to right ends of the front cross beam (11) and the rear cross beam (12), respectively;
an upper cross beam (2) being fixedly connected to an upper side wall of the left longitudinal beam (13) and to an upper side wall of the right longitudinal beam (14), and
a lower cross beam (3) being fixedly connected to a lower side wall of the left longitudinal beam (13) and to a lower side wall of the right longitudinal beam (14),
wherein the upper cross beam (2) and the lower cross beam (3) are spaced apart in an up-down direction.

2. The subframe structure according to claim 1, wherein the subframe structure further comprises two first convex ribs (4), one of the first convex ribs (4) is connected to the front cross beam (11), the left longitudinal beam (13), and the upper cross beam (12), respectively; and the other of the first convex ribs (4) is connected to the front cross beam (11), the right longitudinal beam (14), and the upper cross beam (2), respectively.

3. The subframe structure according to claim 2, wherein the subframe structure further comprises second convex ribs (5) disposed at an inner side wall at a position where the rear cross beam (12) is connected to the left longitudinal beam (13) and/or at an inner side wall at a position where the rear cross beam (12) is connected to the right longitudinal beam (14).

4. The subframe structure according to any one of claims 1 to 3, wherein the subframe structure further comprises electric drive suspension mounting portions (6) configured to mount electric drive suspensions (150) and vehicle body suspension mounting portions (7) configured to mount vehicle body suspensions (160), a part of the electric drive suspension mounting portions (6) are disposed on a front side face of the front cross beam (11), the other part of the electric drive suspension mounting portions (6) are respectively disposed at one ends, close to the rear cross (12) beam, of the left longitudinal beam (13) and the right longitudinal beam (13), and the vehicle body suspension mounting portions (7) are respectively disposed at four corners of the ring frame (1); and/or
the subframe structure further comprises avoidance through holes (8) respectively disposed in the left longitudinal beam (13) and the right longitudinal beam (14) for avoidance of an output shaft of an electric drive system.

5. The subframe structure according to any one of claims 1 to 4, wherein the front cross beam (11), the rear cross beam (12), the left longitudinal beam (13) and the right longitudinal beam (14) are hollow structures, and
the front cross beam (11), the rear cross beam (12), the left longitudinal beam (13), and the right longitudinal beam (14) have a wall thickness of 3-6 mm.

6. The subframe structure according to claim 5, wherein at least part of inner side walls of the front cross beam (11), the rear cross beam (12), the left longitudinal beam (13) and the right longitudinal beam (14) are formed with wall thickness reinforcement portions (15).

7. The subframe structure according to any one of claims 1 to 6, wherein the front cross beam (11), the rear cross beam (12), the left longitudinal beam (13), the right longitudinal beam (14), and the upper cross beam (2) are integrally cast and formed; and
the left longitudinal beam (13) and the right longitudinal beam (14) are symmetrically disposed about a geometric center of the ring frame (1) in a left-right direction.

8. The subframe structure according to any one of claims 1 to 7, wherein the upper cross beam (2) comprises an upper cross beam body (21) provided with a weight reduction portion (22).

9. The subframe structure according to claim 8, wherein the weight reduction portion (22) is configured as grooves (23) disposed in a middle of the upper cross beam body (21), and a plurality of first reinforcing ribs (24) and second reinforcing ribs (25) which are alternately arranged are disposed in each groove (23); and/or
the weight reduction portion (22) is configured as a hollow structure disposed in a middle of the upper cross beam body (21); and/or
the weight reduction portion (22) further comprises at least one weight reduction hole (26) disposed at an end, close to the left longitudinal beam (13) or the right longitudinal beam (14), of the upper cross beam body (12).

10. The subframe structure according to any one of claims 1 to 9, wherein the lower cross beam (3) and the ring frame (1) are integrally cast and formed; or
the lower cross beam (3) is constructed as a hollow structure, and is detachably connected to the ring frame (1).

11. The subframe structure according to any one of claims 1 to 10, wherein the upper cross beam (2) and the lower cross beam (3) are spaced apart in a front-rear direction.

12. The subframe structure according to any one of claims 1 to 11, wherein the subframe structure further comprises a control arm mounting portion (9) configured to mount a control arm, the control arm mounting portion (9) comprises a first mounting bracket (91) configured to mount a front upper arm (100), a second mounting bracket (92) configured to mount a rear upper arm (110), a third mounting bracket (93) configured to mount a toe-in arm (120), a fourth mounting bracket (94) configured to mount a front lower arm (130), and a fifth mounting bracket (95) configured to mount a rear lower arm (140).

13. The subframe structure according to claim 12, wherein the first mounting bracket (91), the second mounting bracket (92), the third mounting bracket (93), the fourth mounting bracket (94) and the fifth mounting bracket (95) are configured as a tab type, an embedded type or an assembled type, and in particular that the first mounting bracket (91) is configured as the tab type, the second mounting bracket (92), the third mounting bracket (93) and the fourth mounting bracket (94) are each configured as the embedded type, and the fifth mounting bracket (95) is configured as the assembly type.

14. The subframe structure according to any one of claims 12 to 13, wherein a lower side of the left longitudinal beam (13) and a lower side of the right longitudinal beam (14) are each integrally formed with a mounting seat (18) forming the fifth mounting bracket (95) configured to mount the rear lower arm (140), and the mounting seat (18) has at least one mounting point (19) formed on the side of the mounting seat (18) back from the ring frame (1) for mounting the lower cross beam (3).

15. A vehicle, comprising the subframe structure according to any one of claims 1 to 14.
